Europäisches Patentamt

European Patent Office

Office européen des brevets

(11) Numéro de publication: **0 484 209 B1**

(12) **FASCICULE DE BREVET EUROPEEN**

(45) Date de publication de fascicule du brevet: **28.09.94**

(51) Int. Cl.⁵: **F04D 29/04**, F16C 21/00, F16C 17/20, F16C 39/04

(21) Numéro de dépôt: **91402843.6**

(22) Date de dépôt: **24.10.91**

(54) **Machine tournante à butée axiale auto-éclipsable à membrane flexible soumise à la pression d'un fluide.**

(30) Priorité: **31.10.90 FR 9013572**

(43) Date de publication de la demande:
**06.05.92 Bulletin 92/19**

(45) Mention de la délivrance du brevet:
**28.09.94 Bulletin 94/39**

(84) Etats contractants désignés:
**DE GB IT SE**

(56) Documents cités:
**US-A- 3 698 251**
**US-A- 4 865 529**

**PATENT ABSTRACTS OF JAPAN vol. 9, no. 194 (M-403)(1917) 10 Août 1985& JP-A-60 060324 ( NTN TOYO BEARING K. K.) 6 Avril 1985**

(73) Titulaire: **SOCIETE EUROPEENNE DE PROPULSION**
**24, rue Salomon de Rothschild**
**F-92150 Suresnes (FR)**

(72) Inventeur: **Mechin, Claude**
**Chemin des Petits Prés.,**
**Villez sous Bailleul**
**F-27950 St. Marcel (FR)**
Inventeur: **Chatenet, Luc**
**16, rue d'Albufera**
**F-27200 Vernon (FR)**

(74) Mandataire: **Thévenet, Jean-Bruno et al**
**Cabinet Beau de Loménie**
**158, rue de l'Université**
**F-75340 Paris Cédex 07 (FR)**

## Description

### Domaine de l'invention

La présente invention concerne une machine tournante véhiculant un fluide, comprenant un arbre tournant monté par l'intermédiaire de paliers radiaux sur un bâti à l'intérieur d'un carter et présentant une poussée axiale de l'arbre dans un sens prédéterminé pendant les phases transitoires de démarrage et d'arrêt, la pression du fluide à plein régime PR étant supérieure à une valeur de pression PL à laquelle la poussée axiale est annulée à la fin de la phase transitoire de démarrage et au début de la phase transitoire d'arrêt.

L'invention concerne ainsi les machines tournantes intervenant dans des circuits fluides, que ces machines soient motrices, comme les pompes centrifuges, ou réceptrices, c'est-à-dire produisant un couple.

Certaines machines présentent une poussée axiale en fonctionnement. Cette poussée est habituellement absorbée par une butée passive, telle qu'une butée à billes ou un roulement à gorges profondes. Lorsqu'on recherche des machines très performantes, présentant notamment une puissance massique élevée, c'est-à-dire impliquant une vitesse et une pression élevées, les poussées axiales sont si fortes qu'un équilibrage axial actif s'impose. Il est réalisé par des dispositifs tels qu'un plateau d'équilibrage ou une contrepompe sur les pompes centrifuges.

Mais de tels dispositifs ne sont efficaces que lorsque la vitesse et la pression qui lui est associée dépasse une fraction prédéterminée de la vitesse nominale. Pour les phases de démarrage et d'arrêt, un système d'équilibrage axial complémentaire est à apporter.

D'autres machines ne présentent pas, de par leur principe, de poussée axiale à vitesse et pression nominales. Elles peuvent cependant en présenter une pendant les phases de démarrage et d'arrêt et appellent aussi pour ces phases un système d'équilibrage axial complémentaire.

Il faut encore signaler que le rendement de ces machines dépend de façon importante des jeux axiaux de fonctionnement des divers organes portés par le rotor, et par voie de conséquence du jeu axial de ce rotor, qu'on est amené à réduire au minimum, notamment dans le cas d'applications spatiales.

### Art antérieur

On connaît déjà la mise en oeuvre, dans des machines tournantes, de butées axiales magnétiques asservies qui permettent d'assurer une concordance parfaite de la poussée et de la contre-poussée, tout en maintenant l'arbre tournant dans une position axiale constante avec une grande précision. La mise en oeuvre de butées axiales magnétiques asservies implique cependant des contraintes de masse et de volume aussi bien pour la butée que pour son système d'alimentation, de sorte qu'un tel système de butée axiale ne peut pas être applicable à tous les types de machines tournantes.

On connaît par ailleurs des butées axiales fixes par rapport au carter et à l'arbre tournant réalisées par exemple à partir de roulements à gorges profondes. De tels systèmes de butée axiale sont exclus pour des vitesses de rotation et des rendements très élevés tels que ceux qui sont exigés dans l'industrie spatiale.

La Société Pratt & Whitney a proposé, dans le cadre d'une turbopompe haute pression prévue pour le moteur principal d'une navette spatiale (SSME), de mettre en oeuvre une butée hydrostatique à alimentation indépendante qui ne fonctionne qu'au démarrage et à l'arrêt. Ce système présente l'inconvénient d'intervenir dans les jeux axiaux de la pompe, ou de nécessiter la réalisation d'un asservissement assez complexe de la pression hydrostatique de la butée à la position axiale de l'arbre. De plus, des organes extérieurs à la machine sont dans tous les cas nécessaires.

La Société Rockwell International Corporation a encore proposé, dans le même cadre d'une turbopompe haute pression, d'utiliser une butée à billes qui absorbe les poussées axiales de démarrage et d'arrêt. Dans un tel système, un dispositif d'équilibrage axial intervient quand la vitesse dépasse une fraction prédéterminée de la vitesse nominale. Les deux pistes de la butée s'écartent de sorte que les billes peuvent alors "flotter" entre les deux pistes.

Malgré sa simplicité, ce système présente l'inconvénient de nécessiter des jeux axiaux compatibles avec deux positions axiales de l'arbre. Ces jeux sont notamment ceux des roulements, des joints d'étanchéité, du rouet s'il s'agit d'une pompe centrifuge. Ce système exige donc des chaînes de cotes parfaitement étudiées et d'une très grande précision de réalisation dès qu'il s'agit d'obtenir des rendements élevés.

Un système de butée axiale à bille éclipsable sous l'action du fluide de travail de la machine tournante, conçu par la Société Rockwell International Corporation, est décrit dans le document US-A-4 865 529 et sera brièvement commenté en référence à la figure 14.

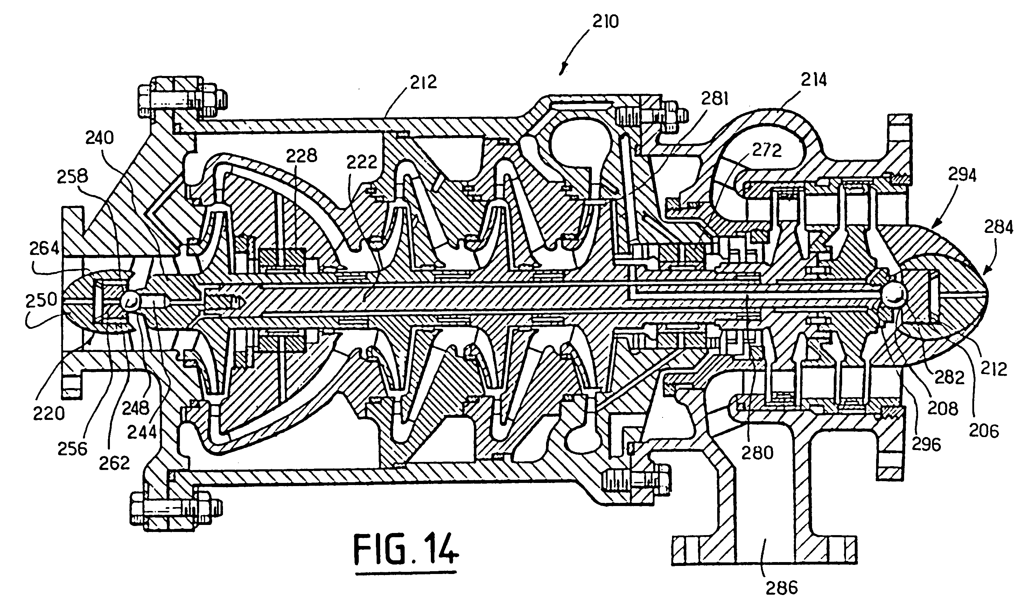

Sur la figure 14, on voit une turbopompe 210 comprenant une partie avant 212 formant pompe et une partie arrière 214 formant turbine. Un arbre central 222 traversant l'ensemble de la turbopompe coopère à ses extrémités avant et arrière avec des systèmes de butée axiale 220, 284, à bille 262, 282 qui agissent dans les phases de démarrage et d'arrêt pour transmettre la poussée et supporter l'arbre 222 tandis que dans les phases de fonctionneent nominal l'arbre est supporté par des paliers radiaux fluides 228, 272. Chaque butée axiale 220, 284 comprend une pièce fixe 250, 294 à l'intérieur de laquelle est disposée axialement une pièce de support de bille 256, 206 préchargée par un ressort 264, 212 du type rondelle Belleville et présentant une portée hémisphérique 258, 208 pour recevoir la bille 262, 282 respectivement qui, pendant les phases de démarrage et d'arrêt, se trouve en contact avec une autre portée hémisphérique 248, 296 formée à l'extrémité de l'arbre tournant. En régime nominal, les pièces de support de bille 256, 206 subissent un léger déplacement axial contre l'action des ressorts 264, 212 pour permettre un escamotage des billes 262, 282 qui ne sont alors plus en contact avec les portées hémisphériques 248, 296 formées aux extrémités de l'arbre 222. L'éclipsage des supports de bille 256, 206 s'effectue sous l'action combinée du fluide appliqué à l'intérieur de l'arbre 222 par des canaux 244, 280, de l'action du piston d'équilibrage 281 qui déplace axialement l'arbre tournant 222 en s'éloignant de la bille 262 de la butée axiale avant, et, dans une très faible mesure de la pression des gaz détendus de turbine exercée sur la pièce support de bille 206 située à l'arrière.

Dans un tel système connu de butée axiale éclipsable sous l'action de la pression d'un fluide, les frottements sont importants au niveau des organes de transmission de poussée constitués par les billes 262, 282 dans la mesure où ces billes ne sont solidaires ni de l'arbre 222 ni de la pièce support 256, 206, mais sont interposées entre un organe tournant 222 et une pièce 256, 206 elle-même immobile en rotation. L'utilisation de ressorts sous forme de rondelles Belleville 264, 212 accentue les frottements et empêche un ajustement progressif de la raideur de sorte que les efforts obtenus ne peuvent pas être déterminés de façon précise. L'action de la pression du fluide de refroidissement sur les billes 262, 282 par les canaux 244, 280 ne peut pas non plus être ajustée dans une large plage de valeurs, dans la mesure où la pression à l'entrée du canal avant 244 est égale à celle que produit l'inducteur 240, la pression à l'entrée du canal arrière 280 est égale à la pression de refoulement, et les sections des canaux 244 et 280 sont faibles. L'existence d'une fuite interne recyclée à l'avant par le canal 244 et d'une fuite vers la turbine à l'arrière par le canal 280 contribuent cependant a diminuer le rendement, et la chaîne des cotes axiales des différents éléments de la turbopompe exige un calcul élaboré et une précision d'exécution élevée.

## Objet et description succincte de l'invention

L'invention a pour objet de remédier aux inconvénients précités et à permettre de réaliser de façon simple et efficace l'éclipsage d'un système de butée axiale dans une machine tournante intervenant dans un circuit fluide en dehors des phases de démarrage et d'arrêt pour lesquelles se produit une poussée axiale, l'éclipsage du système de butée axiale s'opérant automatiquement lorsqu'une fraction prédéterminée de la pression nominale, et donc de la vitesse nominale, est dépassée.

L'invention vise encore à réaliser une machine tournante véhiculant un fluide, dans laquelle les frottements ainsi que le temps de fonctionnement et la vitesse d'entraînement d'un système de butée axiale sont réduits au minimum de manière à augmenter la longévité du système de butée axiale, sans affecter le fonctionnement et le rendement de la machine.

Un autre objet de l'invention consiste à réaliser une machine tournante équipée d'un système à butée axiale pouvant compenser une poussée axiale dans une large plage de valeurs, y compris pour de fortes valeurs.

Ces buts sont atteints grâce à une machine tournante véhiculant un fluide, comprenant un arbre tournant monté par l'intermédiaire de paliers radiaux sur un bâti à l'intérieur d'un carter et présentant une poussée axiale de l'arbre dans un sens prédéterminé pendant les phases transitoires de démarrage et d'arrêt, la pression du fluide à plein régime PR en un point donné de la machine, étant supérieure à une valeur de pression PL à laquelle la poussée axiale est annulée à la fin de la phase transitoire de démarrage et au début de la phase transitoire d'arrêt, caractérisée en ce qu'elle comprend en outre un système de butée axiale auto-éclipsable monté entre l'arbre tournant de la machine et le carter de celle-ci, ledit système de butée axiale auto-éclipsable comprenant une partie de butée translatable symétrique autour de l'axe de rotation de l'arbre tournant, mais immobile en rotation, une partie de butée tournante symétrique autour de l'axe de rotation de l'arbre tournant et montée sur la partie de butée translatable à l'aide d'un palier susceptible de transmettre des efforts axiaux vers la partie de butée translatable, un dispositif flexible de grande raideur reliant au carter la partie de butée translatable de manière à permettre une translation de faible amplitude de la partie de butée translatable le long de l'axe de l'arbre tournant en transmettant vers le carter lesdits efforts axiaux reçus par la partie de butée translatable de la part dudit palier, un organe de transmission de la poussée axiale de l'arbre tournant vers la partie de butée tournante, ledit organe de transmission de poussée étant symétrique autour de l'axe de l'arbre tournant et conformé de manière à être en contact entre l'arbre tournant et la partie de butée tournante, sans exercer d'effort sur celui-ci, lorsque la machine est au repos, et à entraîner la partie de butée tournante par l'intermédiaire d'un frottement purement statique, lorsque la machine est en rotation et exerce une poussée axiale, et des moyens d'application d'un fluide de commande en contact avec ledit dispositif flexible, de telle sorte que la pression de ce fluide exerce sur ledit dispositif flexible une force tendant à écarter de l'arbre la partie de butée translatable, la partie de butée tournante et le cas échéant l'organe de transmission de poussée lorsque la pression du fluide véhiculé par la machine audit point donné dépasse une valeur(1 + E) PL très légèrement supérieure à ladite valeur de pression PL.

Par la mise en oeuvre d'une partie de butée tournante dont l'organe de transmission de poussée est solidaire, les frottements sont réduits au minimum, d'autant plus que l'arbre est supporté par des paliers radiaux indépendants dans toutes les phases de fonctionnement. La présence d'un dispositif flexible à membrane solidaire du carter réduit encore les frottements et permet un ajustement aisé de la raideur par construction, qui autorise l'obtention d'efforts précis. Le système de butée axiale est de conception et de réalisation simples et implique une très faible consommation d'énergie qui a une influence tout-à-fait négligeable sur le rendement de la machine. Le déplacement axial de l'arbre est très faible et le système de butée axiale n'intervient pas dans la détermination des jeux axiaux de l'ensemble rotor. L'obtention de l'écartement de la butée est facile à régler sur la pression désirée, en jouant sur l'épaisseur de la membrane flexible, sur la surface de cette membrane exposée au fluide de commande sur la nature du matériau de cette membrane, et éventuellement sur la pression de ce fluide.

Selon un premier mode de réalisation possible, les moyens d'application d'un fluide de commande comprennent des moyens d'application au dispositif flexible par l'intérieur de la machine de la pression du fluide véhiculé par la machine. Cette pression peut provenir de différents endroits de la machine.

Dans le cas d'une pompe centrifuge multicellulaire, la pression du fluide véhiculé par la machine destinée à être appliquée au dispositif flexible peut-être prise par exemple au niveau du refoulement de l'un des étages.

Le mode de réalisation décrit ci-dessus présente l'avantage de la simplicité compte tenu de l'absence d'organes extérieurs. Par ailleurs, on peut noter que la commande du dispositif flexible ne consomme pas de débit.

Selon un autre mode de réalisation possible, les moyens d'application d'un fluide de commande comprennent un tube extérieur à la machine connecté entre un point de piquage de la pression du fluide véhiculé par la machine et un point d'application de la pression de ce fluide de commande situé au voisinage du dispositif flexible, et un joint d'étanchéité interposé entre le carter et la partie d'arbre coopérant avec le système de butée axiale. Ce mode de réalisation permet d'isoler complètement le dispositif flexible du reste de la machine tout en utilisant une pression de commande directement liée au fonctionnement de la machine.

La pression agissant sur le dispositif flexible peut être ajustée grâce à un détendeur interposé entre la source du fluide de commande et la paroi interne du dispositif flexible.

Dans certaines applications, le fluide de commande peut ne pas être le fluide véhiculé par la machine tournante, mais un autre fluide provenant d'un système de régulation. Dans ce cas, les moyens d'application d'un fluide de commande comprennent un tube extérieur à la machine connecté entre un point de piquage d'un fluide sous pression provenant d'un système de régulation et distinct du fluide véhiculé par la machine, et un point d'injection de ce fluide de commande situé au voisinage du dispositif flexible, un joint d'étanchéité est interposé entre le carter et la partie de l'arbre tournant coopérant avec le système de butée axiale, et un capteur de pression est disposé dans la machine pour commander, par l'intermédiaire du système de régulation, l'ouverture d'une vanne permettant au fluide de commande d'exercer sa pression audit point d'injection.

Selon l'invention, il est également possible d'utiliser un fluide présentant une pression de commande plus importante que la pression nécessaire pour agir sur le dispositif flexible. Dans ce cas, les moyens d'application d'un fluide de commande comprennent un premier dispositif d'application d'un premier fluide de commande du côté de la face interne du dispositif flexible qui est tournée vers l'organe de transmission de poussée, et un deuxième dispositif d'application d'un deuxième fluide de commande du côté de la face externe du dispositif flexible tournée vers le carter, l'un des premier et deuxième fluides de commande étant préférentiellement le fluide véhiculé par la machine.

Le dispositif flexible peut être fixé de façon amovible ou inamovible sur le bâti ou le carter de la machine.

Dans le cas où il est amovible, le dispositif flexible rapporté sur la bâti de la machine peut jouer en outre le rôle de carter vissé ou bridé sur le bâti.

Le dispositif flexible peut être constitué notamment d'un soufflet, d'une membrane ondulée, d'une membrane plane à faces parallèles, par exemple constituée par une plaque métallique ou encore d'une membrane essentiellement hémisphérique.

Selon un mode particulier de réalisation, la machine tournante comprend en outre une butée d'appui limitant la course de la partie de butée translatable lorsque celle-ci s'écarte de l'arbre tournant sous l'effet de la pression de commande. Ceci permet de réduire la raideur du dispositif élastique afin de l'adapter à la pression disponible, ou de réduire son encombrement.

Le palier disposé entre la partie de butée translatable et la partie de butée tournante peut être réalisé de diverses manières mais peut notamment comprendre deux roulements à billes obliques montés en opposition de manière à éliminer tout jeu axial entre la partie de butée tournante et la partie de butée translatable. Ceci permet d'augmenter les tolérances axiales et d'éliminer tout risque de nouveau contact entre l'arbre et l'organe de transmission de poussée après leur séparation.

L'organe de transmission de poussée peut être solidaire de la partie de butée tournante et peut comprendre une bille sertie coopérant avec le bout de l'arbre tournant ou un élément cylindrique limité par deux plans perpendiculaires a son axe et emmanché dans la partie de butée tournante, ou encore un élément cylindrique emmanché axialement dans la partie de butée tournante et limité par une partie torique formant bourrelet, dans sa partie venant en contact avec le bout de l'arbre tournant.

Selon encore un autre mode particulier de réalisation, l'organe de transmission de poussée solidaire de la partie de butée tournante comprend une couronne qui est coaxiale à l'arbre tournant et, lorsque la machine est au repos, vient en contact avec un épaulement ou un anneau solidaire de l'arbre tournant, et l'arbre tournant traverse l'ensemble du système de butée axiale auto-éclipsable.

Toutefois, l'organe de transmission de poussée peut également être solidaire de l'extrémité de l'arbre tournant et coopérer dans ce cas avec l'extrémité de la partie de butée tournante. Dans ce cas, l'organe de transmission de poussée peut comprendre, de la même façon que dans le cas d'un montage sur la partie de butée tournante, une bille ou un élément cylindrique par exemple.

Brève description des dessins

D'autres caractéristiques et avantages de l'invention ressortiront de la description détaillée de modes particuliers de réalisation, donnés à titre d'exemples en référence aux dessins annexés sur lesquels :
- Les figures 1A et 1B sont des vues en demi-coupe axiale, respectivement dans une phase de démarrage et en régime établi, d'un système de butée axiale auto-éclipsable selon un premier mode de réalisation de l'invention dans lequel la butée comprend une membrane flexible plane,
- les figures 2A et 2B sont des vues en demi-coupe axiale, respectivement dans une phase de démarrage et en régime établi, d'un système de butée axiale auto-éclipsable selon une variante de réalisation de l'invention dans laquelle une butée supplémentaire fixe est prévue à l'arrière de la butée auto-éclipsable,
- la figure 3 est une vue en demi-coupe axiale de l'extrémité d'une machine tournante véhiculant un fluide, dans laquelle est installée une butée axiale auto-éclipsable selon un mode particulier de réalisation utilisant directement la pression du fluide disponible à l'intérieur de la machine,
- la figure 4 est une vue en demi-coupe axiale, de l'extrémité d'une machine tournante véhiculant un fluide, dans laquelle est installée une butée axiale auto-éclipsable selon un mode particulier de réalisation utilisant la pression d'un fluide appliqué à partir d'une conduite extérieure à la machine,
- la figure 5 est une vue en coupe axiale de l'extrémité d'une machine tournante véhiculant un fluide, dans laquelle est installée une butée axiale auto-éclipsable selon un mode particulier de réalisation de l'invention dans lequel la butée axiale comprend une membrane amovible constituant une partie du carter de la machine.
- la figure 6 est une vue en demi-coupe axiale de l'extrémité d'une machine tournante véhiculant un fluide, dans laquelle est installé un système de butée axiale auto-éclipsable selon l'invention avec une membrane en forme de soufflet,
- les figures 7 et 8 sont des vues en demi-coupe axiale de l'extrémité d'une machine tournante véhiculant un fluide, selon des variantes de réalisation dans lesquelles la membrane flexible en forme de soufflet d'une butée axiale auto-éclipsable selon l'invention constitue une partie du carter de la machine,

5

- la figure 9 est une vue de détail, en demi-coupe axiale, d'un système de butée axiale auto-éclipsable comprenant un palier à deux roulements à billes obliques,
- la figure 10 est une vue en demi-coupe axiale de l'extrémité d'une machine tournante véhiculant un fluide, qui incorpore un système de butée axiale selon le mode de réalisation de la figure 9,
- la figure 11 est une vue en demi-coupe axiale d'une partie de machine tournante véhiculant un fluide, dans laquelle est installé un système de butée axiale auto-éclipsable qui est traversé par l'arbre de la machine,
- les figures 12 et 13 montrent en coupe axiale une partie d'un système de butée axiale auto-éclipsable, selon deux variantes de réalisation utilisant un organe de transmission de poussée axiale de type cylindrique, et
- la figure 14 est une vue en coupe axiale d'une machine tournante véhiculant un fluide, équipée d'un système de butée axiale selon un dispositif de l'art antérieur.

Description détaillée de modes particuliers de réalisation.

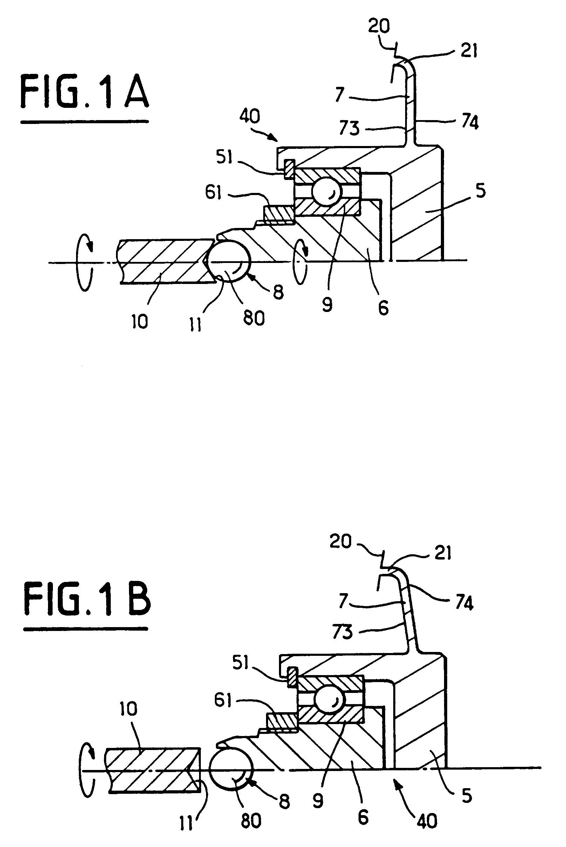

Les figures 1A et 1B montrent un exemple de réalisation d'un système de butée axiale 40 selon l'invention, destiné à être incorporé dans une machine tournante intervenant dans des circuits fluides et pouvant être soit motrice, comme une pompe centrifuge, soit réceptrice, soit une combinaison des deux comme les turbopompes. Sur les figures 1A et 1B, on n'a représenté de façon symbolique et partiellement que l'arbre tournant 10, le bâti 20 et le carter 21 pour montrer les éléments principaux de la machine tournante avec lesquels coopère le système de butée axiale 40, qui est destiné à contrebalancer la poussée axiale exercée par l'arbre 10 pendant les phases de démarrage et d'arrêt, et s'éclipse lorsque la vitesse de rotation de l'arbre 10, et par suite la pression du fluide de travail atteignent des valeurs de plein régime.

Sur les figures 1A et 1B, la butée axiale 40 comprend une partie de butée 5 translatable axialement, qui est reliée au carter 21 de la machine par un dispositif flexible 7 à grande raideur. Une partie de butée tournante 6 est montée par l'intermédiaire d'un palier 9 sur la partie de butée translatable 5. Les parties de butée 5, 6 sont symétriques autour de l'axe de rotation de l'arbre 10.

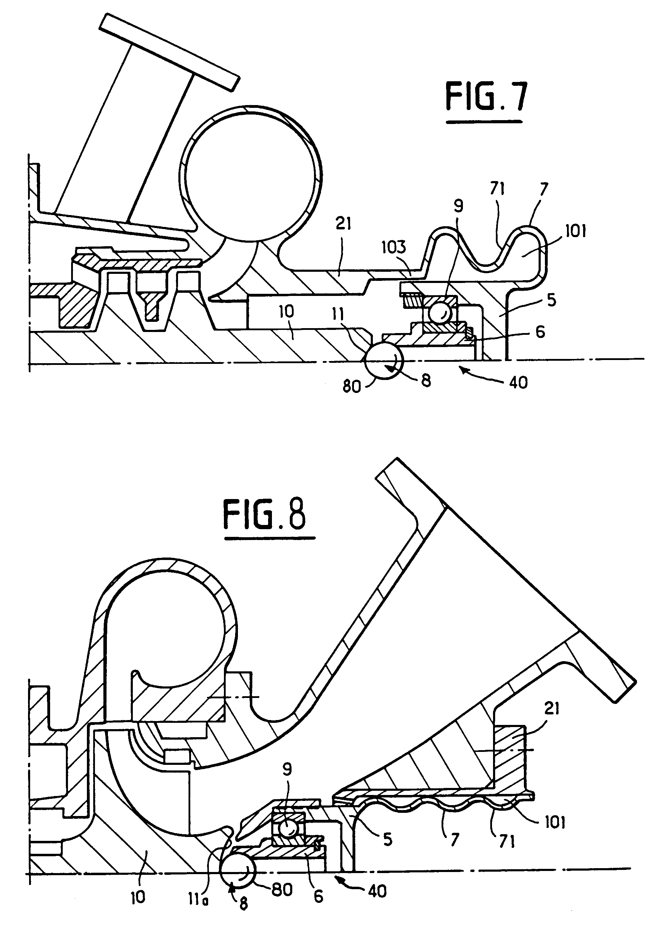

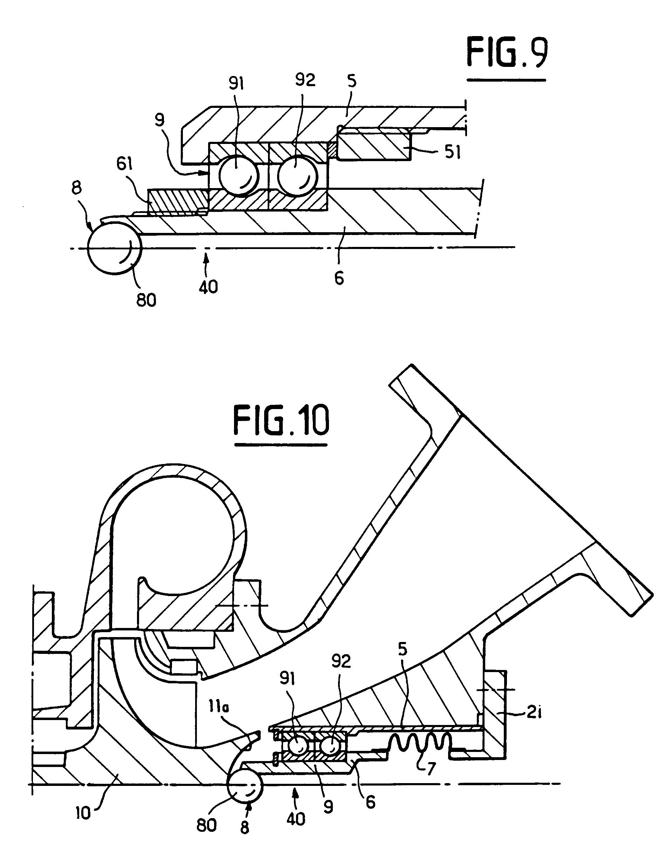

Un organe de transmission de poussée axiale 8 constitué sur les figures 1A et 1B par une bille 80 est rapporté à l'extrémité de la partie de butée tournante 6 éloignée de la partie de butée translatable 5 et coopère avec l'extrémité de l'arbre tournant 10 qui présente une portée 11 pouvant être par exemple conique (fig. 1A, 1B) ou hémisphérique (portée 11a des figures 8 et 10). L'organe de transmission de poussée axiale 8 assure, lors des phases de démarrage et d'arrêt (fig 1A) le contact entre la partie tournante 6 de la butée 40 et le bout d'arbre tournant 11.

Le palier 9 peut être constitué par un roulement à billes avec des cages maintenues en position sur les parties translatable 5 et tournante 6 de la butée axiale 40 par des pièces de retenue 51, 61 respectivement. Le palier 9 assure à la fois la liaison entre la partie tournante 6 et la partie translatable 5, et la transmission de l'effort axial exercé par l'arbre 10.

Le dispositif flexible 7, qui peut être constitué par une membrane métallique plane 70 à faces parallèles d'épaisseur prédéterminée constante et de grande raideur permet à l'ensemble de la butée constituée des parties 5 et 6 et de la bille 80, de se déplacer longitudinalement vers la droite, en régime établi (fig. 1B) sur une faible distance sous l'action d'une pression plus forte A exercée sur la face interne avant 73 de la membrane 70 par rapport à la pression B exercée sur la face externe arrière 74 de la membrane 70.

Le fonctionnement du système de butée axiale 40 est le suivant :
- Avant la mise en route du système, le bout d'arbre 11 de la machine est en contact avec l'organe de transmission de poussée 8 (phase de repos).

Lors de la première partie de la phase de démarrage (fig. 1A), la poussée résiduelle longitudinale est orientée de manière à appuyer sur le contact entre le bout d'arbre 11 et la bille 80 et, par la création d'un frottement purement statique de transmettre ensuite cet effort par l'intermédiaire de la partie tournante 6 et du palier 9.

Cet effort est transmis au carter 21 de la machine par l'intermédiaire de la partie 5 et du dispositif flexible 7.
- La raideur du dispositif flexible 7 étant grande, l'effort reçu par le système au niveau du contact entre la portée 11 et la bille 80 crée un déplacement négligeable.

La face interne 73 de ce dispositif flexible 7 est soumise à la pression A du circuit fluide fonctionnel. Cette pression transmet à l'ensemble un effort qui est fonction de cette pression le plus souvent directement associée à la vitesse de rotation et translate l'ensemble 8, 6, 5 vers la droite lorsque la pression de fluide dépasse une valeur prédéterminée $(1 + E) P_L$ inférieure à la pression $P_R$ correspondant à la vitesse de régime mais très légèrement supérieure à la pression $P_L$ pour laquelle la poussée axiale s'annule. Le contact entre l'arbre 10 et l'organe 8 de transmission de poussée est alors rompu, et la vitesse de la partie tournante 6 s'annule rapidement.

- La position de l'ensemble rotor 10 est alors définie par le système d'équilibrage dynamique, ce qui introduit une très légère translation de l'ensemble mobile 10 vers la gauche.

Le fonctionnement correct d'un tel système est lié à la connaissance de trois paramètres :

- pourcentage de la pression nominale $P_R$ à partir de laquelle le système d'équilibrage devient efficace,
- valeurs et orientation de l'effort dans le transitoire de démarrage,
- valeurs du débattement du système d'équilibrage dynamique.

La connaissance de ces trois paramètres permet le dimensionnement :

- de la partie de butée tournante 6,
- du dispositif flexible 7 auquel est rattachée la partie de butée translatable 5, pour lequel on détermine,
- la raideur de la membrane 70 et la valeur du déplacement nécessaire,
- la valeur de la pression A appliquée sur la face 73, avec mise à air libre sur la face 74 ou éventuellement contre-pression B appliquée.

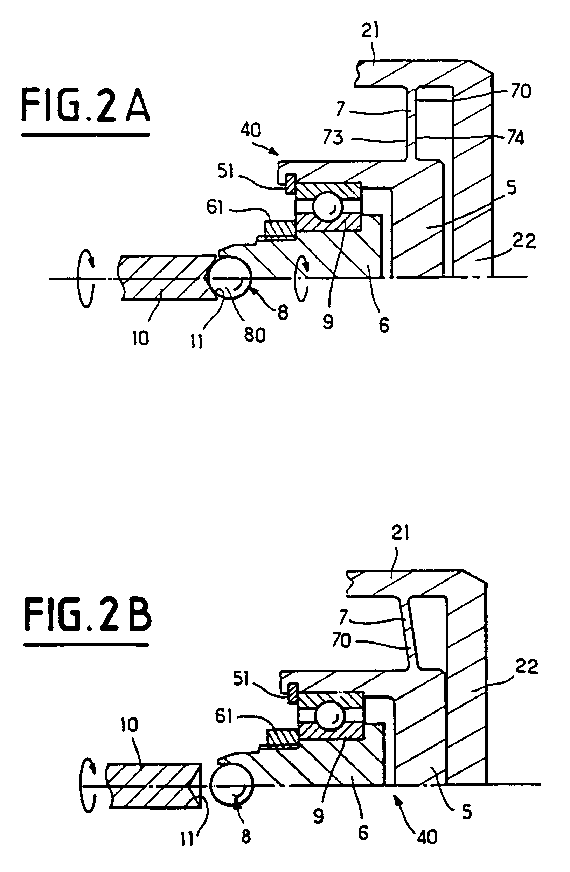

Les figures 2A et 2B montrent un système de butée axiale auto-éclipsable 40 qui est semblable à celui des figures 1A et 1B, mais comprend en outre un appui additionnel 22 solidaire du carter 21.

L'appui additionnel 22 est disposé essentiellement dans un plan perpendiculaire à l'axe de la machine, du côté opposé à l'arbre 10 par rapport à la butée axiale 40. L'appui additionnel 22 assure une position connue de l'ensemble des éléments 5 à 9 de la butée 40, lors du fonctionnement de l'ensemble tournant en régime établi, et permet d'utiliser une membrane 70 présentant une raideur moins élevée, ou une pression A de valeur plus élevée.

On notera que le système de butée axiale selon l'invention n'implique qu'un déplacement axial de l'arbre très faible. Le système de butée axiale n'intervient pas dans la détermination de l'ensemble des jeux axiaux de l'ensemble rotor.

La conception de la butée axiale est simple et la réalisation ne fait appel qu'à des procédés courants des industries de précision (fonderie, mécano-soudure, usinage).

La butée axiale ne fonctionne que pendant de brefs laps de temps et n'implique qu'une faible consommation d'énergie qui a une influence tout-à-fait négligeable sur le rendement de la machine.

L'obtention de l'écartement de la butée 40 est facile à régler sur la pression désirée $(1 + E) P_L$, en jouant sur l'épaisseur de la membrane flexible 70, sur la surface de cet élément exposée au fluide de commande et éventuellement sur la pression A de ce fluide, ou la contre-pression B exercée sur la face externe 74 de la membrane 70.

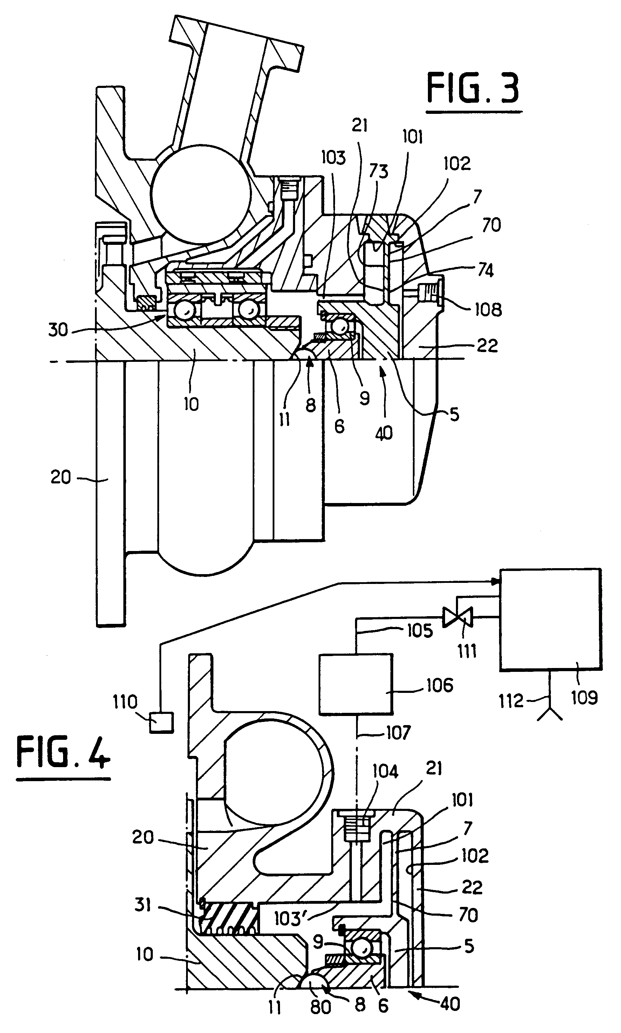

La figure 3 montre une extrémité de machine tournante comprenant un arbre tournant 10 monté par des paliers radiaux 30 sur un bâti 20 et coopérant avec une butée axiale 40 telle que celle décrite en référence aux figures 2A et 2B.

Une prise 108 de raccordement à une source de fluide sous pression est disposée dans la face d'appui additionnelle 22 formant carter à l'extrémité de la machine, et se trouve en communication avec la chambre 102 définie par le carter 21, 22 de la machine et la face externe 74 de la membrane 70. La prise de raccordement 108 permet ainsi l'application d'une contre-pression B sur la membrane 70, ou simplement une mise à l'air libre si la prise 108 n'est ni raccordée à une source de fluide sous pression, ni obturée.

La chambre 101 définie par le carter 21 et la face interne 73 de la membrane 70 est alimentée par un ou plusieurs conduits 103 ou par un espace annulaire, situés à l'intérieur de la machine directement à partir du fluide véhiculé par la machine. Ce mode de réalisation présente l'avantage de la simplicité et ne nécessite aucun organe extérieur à la machine.

La figure 4 montre un autre mode de réalisation dans lequel un joint d'étanchéité 31 est interposé entre l'extrémité de l'arbre 10 située près de la butée axiale 40 et le carter 21 de la machine. Une prise 104 d'injection d'un fluide de commande est raccordée à un tube extérieur 107 d'alimentation en fluide de commande, et débouche par un conduit 103' dans l'espace 101 situé au voisinage de la membrane flexible 70, entre le joint d'étanchéité 31 et la face interne de la membrane 70. Le tube externe 107 est relié, le cas échéant par l'intermédiaire d'un détendeur 106, à une source 105 de fluide de commande. Le fluide de commande peut dans ce cas être constitué par le fluide véhiculé par la machine et provenir d'un point de piquage sur la machine elle-même, ou au contraire être constitué par un fluide distinct provenant d'un système de régulation 109, lui-même alimenté à partir d'une source extérieure 112 de fluide sous pression. Un capteur de pression 110 disposé dans la machine commande, par l'intermédiaire du système de régulation 109, l'ouverture d'une vanne 111 permettant au fluide de commande d'exercer sa pression au point d'injection 104.

Les figures 1A, 1B, 2A, 2B, 3 et 4 montrent un dispositif élastique 7 comprenant une membrane flexible 70 montée de façon inamovible sur le bâti 20 de la machine et pouvant être par exemple soudée au bâti 20.

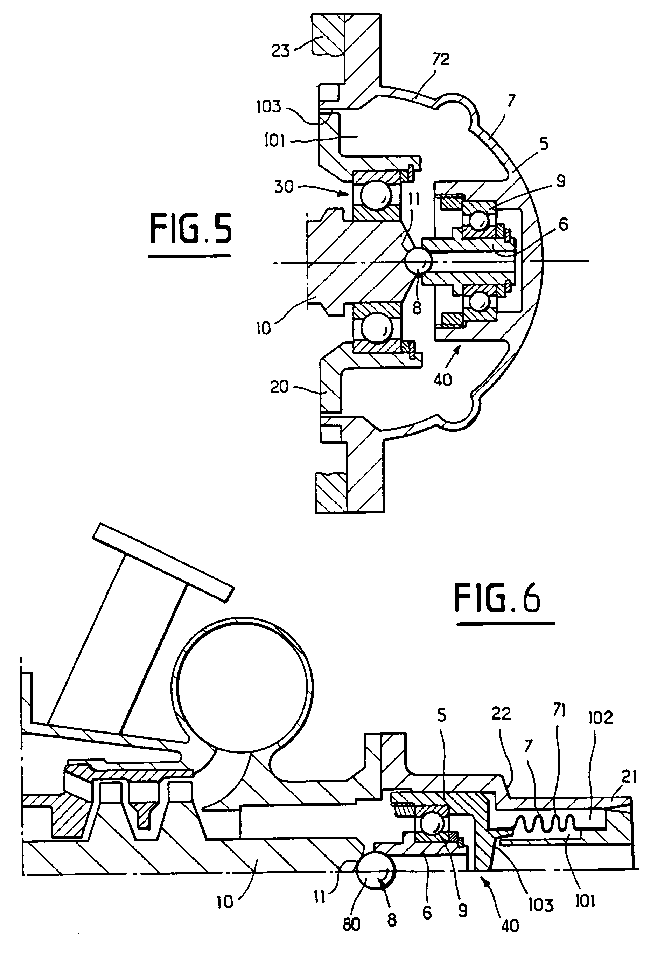

On a représenté sur la figure 5 un dispositif élastique 7 amovible, qui joue le rôle de carter et se trouve fixé sur une bride 23 du bâti. Sur la figure 5, le dispositif élastique comprend une membrane flexible 72 présentant avantageusement une forme convexe par exemple sensiblement hémisphérique et définissant un logement dans lequel se trouve la partie tournante 6 de la butée 40. Ce mode de réalisation permet un réglage aisé du système de butée axiale. La chambre 101 située entre le bâti 20 et la membrane 72 peut être alimentée de façon interne par des passages 103 à partir du fluide véhiculé par la machine tournante comme dans le cas du mode de réalisation de la figure 3, mais pourrait aussi être alimentée à partir d'une prise de raccordement à un tube extérieur comme dans le cas de la figure 4.

Les figures 6, 7, 8, 10 et 11 montrent des modes de réalisation dans lesquels le dispositif flexible 7 comprend non pas une membrane plane ou convexe, mais un soufflet 71, dont la forme est adaptée à la configuration de la machine. La forme et les caractéristiques géométriques du dispositif flexible 7 sont d'une manière générale définies en fonction de la vitesse de rotation de l'arbre 10 et des niveaux de pression du fluide de commande ainsi qu'en fonction des formes et des dimensions de la machine tournante.

Sur la figure 6, on a représenté un épaulement sur le carter 21, qui constitue une surface d'appui 22 additionnelle limitant la course de la partie de butée translatable 5. Le fluide de commande est appliqué par une entrée 103 dans la chambre délimitée par la face interne du soufflet 71 et une partie du carter 21.

Sur les figures 7, 8 et 10, le soufflet 71 constitue lui-même une partie du carter 21.

Le palier 9 assurant la liaison entre la partie de butée tournante 6 et la partie de butée translatable 5, ainsi que la transmission de l'effort axial peut être constitué par exemple par un roulement à billes, un roulement à rouleaux coniques, une butée à billes, une butée hydrodynamique commandée.

Selon un mode particulier de réalisation illustré sur les figures 9 et 10, le palier 9 peut être constitué par un ensemble de deux roulements à billes obliques 91, 92 montés en opposition de manière à éliminer le jeu axial entre les parties de butée 5 et 6. Ceci permet d'éliminer tout risque de nouveau contact entre le bout d'arbre 11a et l'organe de transmission de poussée 8 après leur séparation (fig 10) et permet d'augmenter les tolérances axiales.

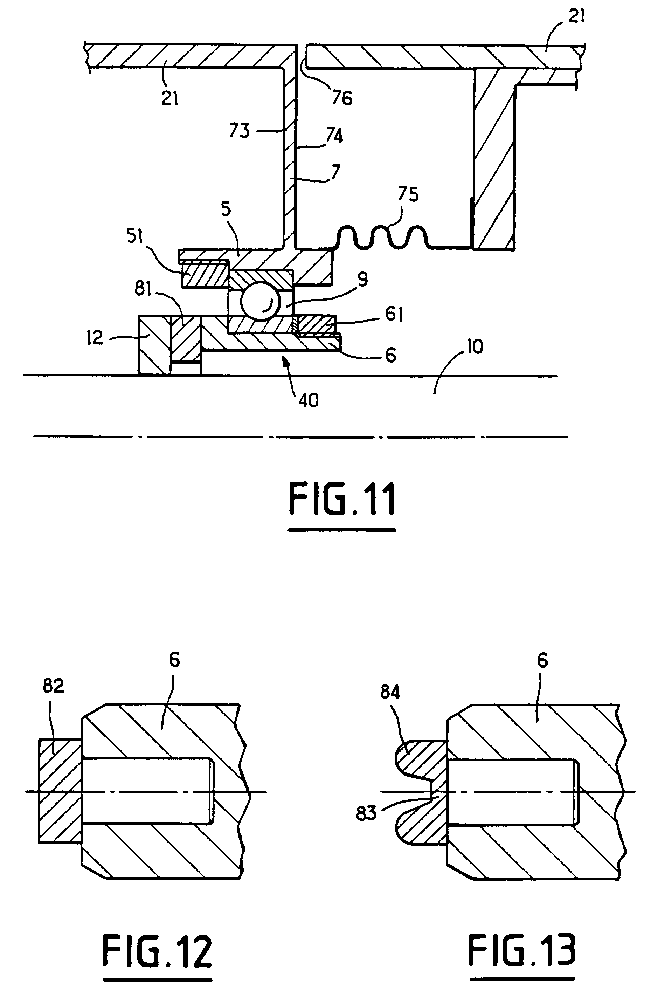

L'organe de transmission de poussée 8 solidaire de la partie tournante de butée 6 peut être constitué par une bille sertie, comme représenté sur les figures 1A, 1B, 2A, 2B et 3 à 10. Cet organe de transmission de poussée 8 peut cependant présenter d'autres formes. Ainsi, sur la figure 12, on a représenté un organe de transmission de poussée 8 constitué par un élément cylindrique 82 placé dans l'axe de la partie tournante de butée 6 et emmanché dans celle-ci, l'élément cylindrique 82 étant limité par deux plans perpendiculaires à son axe.

Sur la figure 13, on a représenté une variante de réalisation dans laquelle l'organe de transmission de poussée 8 solidaire de la partie de butée tournante 6 comprend un élément cylindrique 83 emmanché axialement dans la partie de butée tournante 6 et limité par une partie torique formant bourrelet 84 dans sa partie venant en contact avec le bout de l'arbre tournant 10.

Dans les modes de réalisation des figures 1A, 1B, 2A, 2B, 3 à 10 et 12, 13, on a considéré le cas d'un système de butée axiale auto-éclipsable 40 dans lequel l'organe de transmission de poussée 8, qu'il soit sphérique, cylindrique, torique ou présente une autre forme, par exemple conique, coopère toujours avec une portée, par exemple hémisphérique, plane ou conique, formée à l'extrémité de l'arbre tournant 10.

L'invention s'applique toutefois de la même manière au cas d'un système de butée axiale 40 traversé par l'arbre tournant 10, comme représenté sur la figure 11.

Dans ce cas, l'organe de transmission de poussée solidaire de la partie de butée tournante 6 comprend une couronne 81 qui est coaxiale à l'arbre tournant 10 et, lorsque la machine est en repos, vient en contact avec un épaulement ou anneau 12 solidaire de l'arbre tournant 10. Dans ce cas, une membrane ou un soufflet d'étanchéité supplémentaire 75 est alors nécessaire entre la périphérie du dispositif flexible 7 et le carter 21. Sur la figure 11, on a représenté un dispositif flexible 7 constitué par une membrane plane 7 dont une face 73 est soumise à la pression d'un fluide de commande constitué par le fluide véhiculé par la machine, et une face 74 est mise à l'air libre, par l'ouverture 76. Le soufflet 75 assure l'étanchéité entre la partie de la butée translatable 5 reliée à la face 74 de la membrane 7 et le carter 21. D'autres configurations sont naturellement possibles.

Les systèmes de butée axiale auto-éclipsable décrits précédemment sont particulièrement adaptés aux machines tournantes à usage spatial. A titre d'exemple, on peut citer une turbopompe dont la vitesse de rotation est de 35 000 tours/minute, la puissance est de 12 MW, la masse est de 260 kg et le rendement est de 0,76.

Parmi les avantages des systèmes de butée axiale auto-éclipsable selon l'invention, on peut noter l'absence de frottements au niveau du dispositif élastique 7, de même qu'au niveau de l'organe de transmission de poussée 8 et la facilité d'ajustement, lors de la construction, de la raideur de la membrane flexible dont l'épaisseur et la surface peuvent être choisies dans des plages de valeurs très larges. La nature du matériau utilisé pour la membrane flexible permet également d'adapter facilement les caractéristiques du dispositif de butée axiale, pour une même turbomachine, à des poussées axiales très différentes. Le montage et le démontage du système de butée axiale auto-éclipsable peuvent être réalisés facilement dans la mesure où ils n'interfèrent pas avec la chaîne de cotes axiales de la machine tournante. Enfin, le système de butée axiale ne diminue en aucune manière le rendement de la machine.

On notera que pour les machines tournantes véhiculant un fluide, telles que des pompes centrifuges par exemple, l'invention peut s'appliquer quel que soit le type ou les caractéristiques particulières de cette pompe.

Dans tous les cas, l'inégalité suivante est respectée :

$$TM < A1.PM \qquad (1)$$

où :

TM est la poussée axiale maximale de la pompe en régime nominal.

A1 est la surface d'un cercle qui a pour diamètre celui du joint de rouet.

PM est la pression de refoulement en sortie de pompe, donc la pression maximale que l'on puisse rencontrer dans la pompe.

Selon le principe même de l'invention, le retrait de la membrane doit être obtenu lorsque la poussée axiale TL, sensiblement inférieure à TM, est atteinte.

On peut ainsi écrire les inégalités suivantes :

$$TL << TM \qquad (2)$$

$$TL << A1.PM \qquad (3)$$

Dans tous les cas, il peut être satisfait à cette inégalité en construisant une membrane élastique qui aura même diamètre que le joint de rouet, bien que le choix d'autres diamètres soit également possible, et en exerçant sur cette membrane une pression PL égale ou inférieure à PM.

Dans les divers modes de fonctionnement des pompes, il est possible de donner à la membrane une caractéristique Déformation-Contrainte satisfaisante, en assurant notamment une flèche pouvant être comprise entre environ 50 et 500 micromètres lorsque la pression PL est légèrement dépassée.

A titre d'exemples, adaptés à des turbopompes de moteur-fusées, et pour une pression de commande PL = 50 bars, on peut choisir des membranes présentant une épaisseur comprise entre environ 1 et 5 mm et répondant aux caractéristiques suivantes :

| 0<br>Membrane | Flèche totale<br>Membrane | Raideur<br>Membrane | Poussée axiale PL<br>Reprise par la butée |
|---------------|---------------------------|---------------------|-------------------------------------------|
| 50 mm | 0,10 mm | 15 000 daN/mm | 700 daN |
| 100 mm | 0,16 mm | 25 000 daN/mm | 2 000 daN |

épaisseur entre 1 et 5 mm

Comme cela a déjà été indiqué précédemment, le dispositif élastique 7 selon l'invention peut être constitué d'un soufflet comportant une ou plusieurs ondulations.

Dans ce cas, la raideur par onde Ca1 peut varier de quelques centaines à quelques milliers de daN par millimètre.

Cette raideur peut être diminuée, si nécessaire en accroissant le nombre d'ondes Z.

La raideur de l'ensemble est définie par le rapport Ca1/Z.

Les membranes planes qui permettent d'obtenir une grande raideur peuvent être utilisées de préférence pour les ensembles à jeu réduit tandis que les soufflets permettent de définir un dispositif élastique souple.

On notera par ailleurs, que le plateau d'équilibrage d'une machine tournante véhiculant un fluide est généralement conçu de telle manière que lors du démarrage l'arbre se trouve en contact avec la butée et que l'effort axial de l'arbre soit exercé dans un sens axial bien déterminé.

Au cas où lors de la mise en route ou de la phase transitoire d'arrêt le sens de l'effort axial exercé par l'arbre est variable, il est possible d'agencer un système de butée axiale auto-éclipsable à chaque extrémité de l'arbre de manière à permettre une reprise de l'effort axial dans les deux sens de déplacement possible de l'arbre.

Il est à remarquer que la mise en oeuvre d'un ou deux systèmes de butée axiale auto-éclipsable n'intervient pas dans la détermination des jeux axiaux prévus par construction dans une machine tournante dans la mesure où ces jeux sont pour l'essentiel déterminés par la course du plateau d'équilibrage qui est mis en oeuvre de façon classique.

Lors de la mise en oeuvre de deux systèmes de butée axiale auto-éclipsable aux deux extrémités d'une même machine, les deux systèmes peuvent être du même type, par exemple à membrane flexible soumise à la pression d'un fluide comme selon la présente invention. Toutefois, afin de faciliter les réglages des deux systèmes, il est possible de mettre en oeuvre deux systèmes de butée axiale auto-éclipsable commandés par des paramètres différents. Ainsi, à l'une des extrémités de la machine, le système de butée axiale auto-éclipsable peut être du type à membrane flexible soumise à la pression , comme selon la présente invention, tandis que, à l'autre extrémité de la machine, le système de butée axiale auto-éclipsable pouvant être d'un autre type.

## Revendications

1. Machine tournante véhiculant un fluide, comprenant un arbre tournant (10) monté par l'intermédiaire de paliers radiaux (30) sur un bâti (20) à l'intérieur d'un carter (21) et présentant une poussée axiale de l'arbre dans un sens prédéterminé pendant les phases transitoires de démarrage et d'arrêt, la pression du fluide à plein régime PR en un point donné de la machine étant supérieure à une valeur de pression PL à laquelle la poussée axiale est annulée à la fin de la phase transitoire de démarrage et au début de la phase transitoire d'arrêt,caractérisée en ce qu'elle comprend en outre un système de butée axiale (40) auto-éclipsable monté entre l'arbre tournant (10) de la machine et le carter (21) de celle-ci, ledit système de butée axiale (40) auto-éclipsable comprenant une partie de butée translatable (5) symétrique autour de l'axe de rotation de l'arbre tournant (10), mais immobile en rotation, une partie de butée tournante (6) symétrique autour de l'axe de rotation de l'arbre tournant (10) et montée sur la partie de butée translatable (5) à l'aide d'un palier (9) susceptible de transmettre des efforts axiaux vers la partie de butée translatable (5), un dispositif flexible (7) de grande raideur reliant au carter (21) la partie de butée translatable (5) de manière à permettre une translation de faible amplitude de la partie de butée translatable (5) le long de l'axe de l'arbre tournant (10) en transmettant vers le carter (21) lesdits efforts axiaux reçus par la partie de butée translatable (5) de la part dudit palier (9), un organe (8) de transmission de la poussée axiale de l'arbre tournant (10) vers la partie de butée tournante (6), ledit organe de transmission de poussée (8) étant symétrique autour de l'axe de l'arbre tournant (10), et conformé de manière à être en contact entre l'arbre tournant (10) et la partie de butée tournante (6) sans exercer d'effort sur celui-ci, lorsque la machine est au repos, et à entraîner la partie de butée tournante (6) par l'intermédiaire d'un frottement purement statique, lorsque la machine est en rotation et exerce une poussée axiale, et des moyens (101 à 103) d'application d'un fluide de commande en contact avec ledit dispositif flexible (7), de telle sorte que la pression de ce fluide exerce sur ledit dispositif flexible (7) une force tendant à écarter de l'arbre (10) la partie de butée translatable (5), la partie de butée tournante (6) et le cas échéant l'organe de transmission de poussée (8) lorsque la pression du fluide véhiculé par la machine audit point donné dépasse une valeur (1 + E) PL très légèrement supérieure à ladite valeur de pression PL.

**2.** Machine tournante selon la revendication 1, caractérisée en ce que les moyens (101 à 103) d'application d'un fluide de commande comprennent des moyens d'application au dispositif flexible par l'intérieur de la machine de la pression du fluide véhiculé par la machine.

**3.** Machine tournante selon la revendication 1, caractérisée en ce que les moyens (101 à 103) d'application d'un fluide de commande comprennent un tube (107) extérieur à la machine connecté entre un point de piquage de la pression du fluide véhiculé par la machine et un point (104) d'application de la pression de ce fluide de commande situe au voisinage du dispositif flexible (7), et un joint d'étanchéite (31) interposé entre le carter (21) et la partie d'arbre (10) coopérant avec le système de butée axiale (40).

**4.** Machine tournante selon la revendication 1, caractérisée en ce que les moyens (101 à 103) d'application d'un fluide de commande comprennent un détendeur (106) interposé entre la source (105) du fluide de commande et la paroi du dispositif flexible (7).

**5.** Machine tournante selon la revendication 1, caractérisée en ce que les moyens d'application d'un fluide de commande comprennent un tube (107) extérieur à la machine connecté entre un point de piquage d'un fluide sous pression provenant d'un système de régulation (109) et distinct du fluide véhiculé par la machine, et un point (104) d'injection de ce fluide de commande situe au voisinage du dispositif flexible (7), un joint d'étanchéité (31) interposé entre le carter (21) et la partie de l'arbre tournant (10) coopérant avec le système de butée axiale (40), et un capteur de pression (110) dépose dans la machine pour commander par l'intermédiaire dudit système de régulation (109) l'ouverture d'une vanne (111) permettant au fluide de commande d'exercer sa pression audit point d'injection (104).

**6.** Machine tournante selon la revendication 1, caractérisée en ce que les moyens (101 à 103) d'application d'un fluide de commande comprennent un premier dispositif (101) d'application d'un premier fluide de commande du côté de la face interne du dispositif flexible (7) qui est tournée vers l'organe de transmission de poussée (8), et un deuxième dispositif (102, 108) d'application d'un deuxième fluide de commande du côte de la face externe du dispositif flexible (7) tournée vers le carter (21).

**7.** Machine tournante selon la revendication 6, caractérisée en ce que l'un des premier et deuxième fluides de commande est constitué par le fluide véhiculé par la machine.

**8.** Machine tournante selon l'une quelconque des revendications 1 à 7, caractérisée en ce que le dispositif flexible (7) comprend une plaque métallique plane (70) à faces parallèles.

**9.** Machine tournante selon l'une quelconque des revendications 1 à 7, caractérisée en ce que le dispositif flexible (7) comprend un élément fixé de façon inamovible sur le bâti (20) de la machine.

**10.** Machine tournante selon l'une quelconque des revendications 1 à 7, caractérisée en ce que le dispositif flexible (7) comprend un élément amovible rapporté sur le bâti (20) de la machine.

**11.** Machine tournante selon la revendication 10, caractérisée en ce que ledit élément amovible (7) rapporté sur le bâti (20) de la machine joue en outre le rôle de carter (72) vissé ou bridé sur le bâti.

**12.** Machine tournante selon l'une quelconque des revendications 1 à 7, caractérisée en ce que le dispositif flexible (7) comprend un soufflet (71).

**13.** Machine tournante selon l'une quelconque des revendications 1 à 12, caractérisée en ce qu'elle comprend en outre une butée d'appui (22) limitant la course de la partie de butée translatable (5) lorsque celle-ci s'écarte de l'arbre tournant (10) sous l'effet de la pression de commande.

**14.** Machine tournante selon l'une quelconque des revendications 1 à 13, caractérisée en ce que l'organe de transmission de poussée (8) est solidaire de la partie de butée tournante (6) et comprend une bille (80) sertie coopérant avec le bout (11, 11a) de l'arbre tournant (10).

**15.** Machine tournante selon l'une quelconque des revendications 1 à 13, caractérisée en ce que l'organe de transmission de poussée (8) est solidaire de la partie de butée tournante (6) et comprend un

EP 0 484 209 B1

élément cylindrique (82) limité par deux plans perpendiculaires à son axe et emmanché dans la partie de butée tournante (6).

16. Machine tournante selon l'une quelconque des revendications 1 à 13, caractérisée en ce que l'organe de transmission de poussée (8) est solidaire de la partie de butée tournante (6) et comprend un élément cylindrique (83) emmanché axialement dans la partie de butée tournante et limité par une partie torique formant bourrelet (84), dans sa partie venant en contact avec le bout de l'arbre tournant (10).

17. Machine tournante selon l'une quelconque des revendications 1 à 16, caractérisée en ce que la partie de butée tournante (6) est montée par rapport à la partie de butée translatable (5) à l'aide de deux roulements à billes obliques (91, 92) montés en opposition de manière à éliminer tout jeu axial entre la partie de butée tournante (6) et la partie de butée translatable (5).

18. Machine tournante selon l'une quelconque des revendications 1 à 17, caractérisée en ce que l'organe de transmission de poussée est solidaire de la partie de butée tournante (6) et comprend une couronne (81) qui est coaxiale à l'arbre tournant (10) et, lorsque la machine est au repos, vient en contact avec un épaulement ou un anneau (12) solidaire de l'arbre tournant (10), et en ce que l'arbre tournant (10) traverse l'ensemble du système de butée axiale auto-éclipsable (40).

19. Machine tournante selon l'une quelconque des revendications 1 à 13, caractérisée en ce que l'organe de transmission de poussée (8) est solidaire de l'extrémité de l'arbre tournant (10) et coopère avec l'extrémité de la partie de butée tournante.

**Claims**

1. Rotary machine conveying a fluid, the machine comprising a rotary shaft (10) mounted via radial bearings (30) to a frame (20) inside a case (21), and the shaft delivering axial thrust in a predetermined direction during the transient stages of starting and stopping, the pressure PR of the fluid at full speed at a given point in the machine being greater than the pressure value PL at which axial thrust disappears at the end of the transient starting stage and at the beginning of the transient stopping stage, characterized in that the machine further comprises an automatically-retracting axial abutment system (40) mounted between its rotary shaft (10) and its case (21), said automatically-retracting axial abutment system (40) comprising a displaceable abutment portion (5) that is symmetrical about the axis of rotation of the rotary shaft (10) but it is prevented from rotating, a rotary abutment portion (6) that is symmetrical about the axis of rotation of the rotary shaft (10) and that is mounted on the displaceable abutment portion (5) by means of a bearing (9) suitable for transmitting axial forces to the displaceable abutment portion (5), a flexible device (7) of great stiffness connecting the displaceable abutment portion (5) to the case (21) in such a manner as to enable the displaceable abutment portion (5) to move in small-amplitude translation along the axis of the rotary shaft (10) while transmitting said axial forces received by the displaceable abutment portion (5) from said bearing (9) to the case (21), an axial thrust transmission member (8) for transmitting thrust from the rotary shaft (10) to the rotary abutment portion (6), said thrust transmission member (8) being symmetrical about the axis of the rotary shaft (10) and being shaped in such a manner as to be in contact between the rotary shaft (10) and the rotary abutment portion (6) without exerting force thereon whenever the machine is at rest, and to drive the rotary abutment portion (6) by purely static friction when the machine is rotating and is exerting axial thrust, and means (101, 103) for applying a control fluid in contact with said flexible device (7) in such a manner that the pressure of the fluid exerts a force on said flexible device (7) tending to move the displaceable abutment portion (5), the rotary abutment portion (6), and, where appropriate, the thrust transmission member (8) away from the shaft (10) whenever the pressure of the fluid conveyed by the machine at said given point exceeds a value $(1 + E)PL$ which is very slightly greater than said pressure value PL.

2. Rotary machine according to claim 1, characterized in that the means (101 to 103) for applying a control fluid comprise means for applying the pressure of the fluid conveyed by the machine to the flexible device via the inside of the machine.

12

3. Rotary machine according to claim 1, characterized in that the means (101 to 103) for applying a control fluid comprise a tube (107) outside the machine connected between a tapping point for obtaining the pressure of the fluid conveyed by the machine and a point (104) for applying the pressure of said control fluid, which point is situated in the vicinity of the flexible device (7), a sealing ring (31) being interposed between the case (21) and the portion of the shaft (10) that co-operates with the axial abutment system (40).

4. Rotary machine according to claim 1, characterized in that the means (101 to 103) for applying a control fluid include an expander (106) interposed between the source (105) of the control fluid and the wall of the flexible device (7).

5. Rotary machine according to claim 1, characterized in that the means for applying a control fluid comprise a tube (107) outside the machine connected between a tapping point for tapping a fluid under pressure from a regulator system (109), which fluid is distinct from the fluid conveyed by the machine and an injection point (104) for injecting said control fluid and situated in the vicinity of the flexible device (7), a sealing ring (31) being interposed between the case (21) and the portion of the rotary shaft (10) that co-operates with the axial abutment system (40), and a pressure sensor (110) being disposed in the machine to act via said regulator system (109) to open a valve (111) enabling the control fluid to exert its pressure at said injection point (104).

6. Rotary machine according to claim 1, characterized in that the means (101 to 103) for applying a control fluid comprise a first device (101) for applying a first control fluid to the inside face of the flexible device (7) directed towards the thrust transmission member (8), and a second device (102, 108) for applying a second control fluid to the outside face of the flexible device (7) directed towards the case (21).

7. Rotary machine according to claim 6, characterized in that one of the first and second control fluids is constituted by the fluid conveyed by the machine.

8. Rotary machine according to any one of claims 1 to 7, characterized in that the flexible device (7) comprises a plane metal plate (70) having parallel faces.

9. Rotary machine according to any one of claims 1 to 7, characterized in that the flexible device (7) comprises a component that is fixed permanently to the frame (20) of the machine.

10. Rotary machine according to any one of claims 1 to 7, characterized in that the flexible device (7) comprises a removable component connected to the frame (20) of the machine.

11. Rotary machine according to claim 10, characterized in that said removable component (7) connected to the frame (20) of the machine also acts as a case (72) that is screwed or clamped to the frame.

12. Rotary machine according to any one of claims 1 to 7, characterized in that the flexible device (7) comprises a bellows (71).

13. Rotary machine according to any one of claims 1 to 12, characterized in that it further comprises a rest (22) limiting the scope of the displaceable abutment portion (5) as it moves away from the rotary shaft (10) under the effect of the control pressure.

14. Rotary machine according to any one of claims 1 to 13, characterized in that the thrust transmission member (8) is fixed to the rotary abutment portion (6) and comprises a crimped ball (80) co-operating with the end (11, 11a) of the rotary shaft (10).

15. Rotary machine according to any one of claims 1 to 13, characterized in that the thrust transmission member (8) is fixed to the rotary abutment portion (6) and comprises a cylindrical component (82) delimited by two planes perpendicular to its axis and received in the rotary abutment portion (6).

16. Rotary machine according to any one of claims 1 to 13, characterized in that the thrust transmission member (8) is fixed to the rotary abutment portion (6) and comprises a cylindrical component (83)

EP 0 484 209 B1

received axially in the rotary abutment portion and delimited by a toroidal portion forming a lip (84) in the portion of the thrust member that comes into contact with the end of the rotary shaft (10).

17. Rotary machine according to any one of claims 1 to 16, characterized in that the rotary abutment portion (6) is mounted relative to the displaceable abutment portion (5) by means of two oppositely-mounted angular contact ball bearings (91, 92), thereby eliminating any axial play between the rotary abutment portion (6) and the displaceable abutment portion (5).

18. Rotary machine according to any one of claims 1 to 17, characterized in that the thrust transmission member is fixed to the rotary abutment portion (6) and comprises a ring (81) which is coaxial with the rotary shaft (10) and which, when the machine is at rest, comes into contact with a shoulder or a ring (12) fixed to the rotary shaft (10), and in that the rotary shaft (10) passes through the entire automatically-retracting axial abutment system (40).

19. Rotary machine according to any one of claims 1 to 13, characterized in that the thrust transmission member (8) is fixed to the end of the rotary shaft (10) and co-operates with the end of the rotary abutment portion.

**Patentansprüche**

1. Rotationsmaschine zur Förderung eines Fluids, mit einer über radiale Lager (30) auf einem Rahmen (20) innerhalb eines Gehäuses (21) montierten rotierenden Welle (10), wobei die Welle eine Axialkraft in einer vorbestimmten Richtung während der Anlauf- bzw. Anhalte-Übergangsphase erfährt, an einer gegebenen Stelle der Maschine der Fluiddruck bei Höchstdrehzahl PR größer ist als ein Druckwert PL, bei welchem die Axialkraft am Ende der Anlauf- Übergangsphase und am Anfang der Anhalte-Übergangsphase aufgehoben ist, **dadurch gekennzeichnet**, daß sie zudem ein selbsteinziehbares Axialwiderlagersystem (40) aufweist, das zwischen der rotierenden Welle (10) der Maschine und ihrem Gehäuse (21) montiert ist, wobei das selbsteinziehbare Axialwiderlagersystem (40) ein zur Drehachse der rotierenden Welle (10) rotationssymmetrisches, jedoch drehfestes verschiebbares Widerlagerteil (5) aufweist, weiterhin ein zur Drehachse der rotierenden Welle (10) rotationssymmetrisches und an dem verschiebbaren Widerlagerteil (5) mit Hilfe eines Lagers (9) befestigtes drehbares Widerlagerteil (6), wobei das Lager (9) die axialen Kräfte zum verschiebbaren Widerlagerteil (5) hin übertragen kann, eine flexible Vorrichtung (7) von großer Steifigkeit, die das verschiebbare Widerlagerteil (5) mit dem Gehäuse so verbindet, daß eine geringe Verschiebung des verschiebbaren Widerlagerteils (5) entlang der Achse der rotierenden Welle (10) ermöglicht wird, wobei die von dem verschiebbaren Widerlagerteil (5) seitens des Lagers (9) aufgenommenen Axialkräfte zum Gehäuse übertragen werden, ein Übertragungsorgan (8) zur Übertragung der Axialkraft der rotierenden Welle (10) zum drehbaren Widerlagerteil (6), wobei das Schubübertragungsorgan (8) zur Achse der rotierenden Welle (10) rotationssymmetrisch und so ausgebildet ist, daß es zwischen der rotierenden Welle (10) und dem drehbaren Widerlagerteil (6) anliegt, ohne eine Kraft auf sie auszuüben, wenn die Maschine stillsteht, und daß es das drehbare Widerlagerteil (6) über eine rein statische Reibung antreibt, wenn die Maschine läuft und eine Axialkraft ausübt, und Mittel (101 bis 103) zum Zuführen eines Steuerfluids in Kontakt mit der flexiblen Vorrichtung (7), so daß der Druck dieses Fluids auf die flexible Vorrichtung (7) eine Kraft ausübt, die das verschiebbare Widerlagerteil (5), das drehbare Widerlagerteil (6) und gegebenenfalls das Schubübertragungsorgan von der Welle (10) zu entfernen sucht, wenn der Druck des von der Maschine geförderten Fluids an der vorgegebenen Stelle einen Wert (1 + E) PL übersteigt, der etwas über dem Druckwert PL liegt.

2. Rotationsmaschine nach Anspruch 1, dadurch gekennzeichnet, daß die Mittel (101 bis 103) zum Zuführen eines Steuerfluids Mittel zum Anlegen des Drucks des von der Maschine geförderten Fluids an die flexible Vorrichtung von der Innenseite der Maschine aus enthalten.

3. Rotationsmaschine nach Anspruch 1, dadurch gekennzeichnet, daß die Mittel (101 bis 103) zum Zuführen eines Steuerfluids ein Rohr (107) außerhalb der Maschine aufweisen, das zwischen einer Stelle zum Abzweigen des Drucks des von der Maschine geförderten Fluids und einer Stelle (104) zum Anlegen des Drucks dieses Steuerfluids angeschlossen ist, die sich in der Nähe der flexibler Vorrichtung (7) befindet, sowie eine Dichtung (31), die zwischen dem Gehäuse (21) und dem Teil der Welle (10) eingefügt ist, der mit dem Axialwiderlagersystem (40) zusammenwirkt.

14

4. Rotationsmaschine nach Anspruch 1, dadurch gekennzeichnet, daß die Mittel (101 bis 103) zum Zuführen eines Steuerfluids ein Reduzierventil (106) aufweisen, das zwischen der Quelle (105) des Steuerfluids und der Wand der flexiblen Vorrichtung (7) eingefügt ist.

5. Rotationsmaschine nach Anspruch 1, dadurch gekennzeichnet, daß die Mittel (101 bis 103) zum Zuführen eines Steuerfluids ein Rohr (107) außerhalb der Maschine, das zwischen einer Abzweigstelle für ein Druckfluid, das von einem Regelsystem (109) stammt und sich von dem von der Maschine geförderten Fluid unterscheidet, und einer Einspritzstelle (104) dieses Steuerfluids angeschlossen ist, die sich in der Nähe der flexibler Vorrichtung (7) befindet, und wobei eine Dichtung (31), die zwischen dem Gehäuse (21) und dem Teil der rotierenden Welle (10) eingefügt ist, der mit dem Axialwiderlagersystem zusammenwirkt, sowie einen Druckgeber (110) aufweisen, der in der Maschine eingesetzt ist, um über das Regelsystem (109) das Öffnen eines Ventils (111) zu steuern, das dem Steuerfluid erlaubt, seinen Druck an der Einspritzstelle (104) auszuüben.

6. Rotationsmaschine nach Anspruch 1, dadurch gekennzeichnet, daß die Mittel (101 bis 103) zum Zuführen eines Steuerfluids eine erste Vorrichtung (101) zum Zuführen eines ersten Steuerfluids auf der zum Schubübertragungsorgan (8) gerichteten Innenseite der flexiblen Vorrichtung (7) und eine zweite Vorrichtung (102, 108) zum Zuführen eines zweiten Steuerfluids auf der zum Gehäuse gerichteten Außenseite der flexiblen Vorrichtung (7) aufweisen.

7. Rotionsmaschine nach Anspruch 6, dadurch gekennzeichnet, daß das erste oder das zweite Steuerfluid das von der Maschine geförderte Fluid ist.

8. Rotionsmaschine nach einem der Ansprüche 1 bis 7, dadurch gekennzeichnet, daß die flexible Vorrichtung (7) eine ebene Metallplatte (70) mit parallelen Flächen aufweist.

9. Rotionsmaschine nach einem der Ansprüche 1 bis 7, dadurch gekennzeichnet, daß die flexible Vorrichtung (7) ein am Rahmen (20) der Maschine unlösbar angebrachtes Bauteil aufweist.

10. Rotionsmaschine nach einem der Ansprüche 1 bis 7, dadurch gekennzeichnet, daß die flexible Vorrichtung (7) ein am Rahmen (20) der Maschine lösbar angebrachtes Bauteil aufweist.

11. Rotionsmaschine nach Anspruch 10, dadurch gekennzeichnet, daß das am Rahmen (20) der Maschine lösbar angebrachte Bauteil zudem die Rolle des am Rahmen angeschraubten oder angeflanschten Gehäuses (72) spielt.

12. Rotionsmaschine nach einem der Ansprüche 1 bis 7, dadurch gekennzeichnet, daß die flexible Vorrichtung (7) einen Faltenbalg (71) aufweist.

13. Rotionsmaschine nach einem der Ansprüche 1 bis 12, dadurch gekennzeichnet, daß sie außerdem einen Anschlag (22) aufweist, der den Hub des verschiebbaren Widerlagerteils (5) begrenzt, wenn sich dieser von der rotierenden Welle (10) unter der Wirkung des Steuerdrucks entfernt.

14. Rotionsmaschine nach einem der Ansprüche 1 bis 13, dadurch gekennzeichnet, daß das Schubübertragungsorgan (8) mit dem drehbaren Widerlagerteil (6) fest verbunden ist und eine eingefaßte Kugel (80) aufweist, die mit dem Ende (11, 11a) der rotierenden Welle (10) zusammenwirkt.

15. Rotionsmaschine nach einem der Ansprüche 1 bis 13, dadurch gekennzeichnet, daß das Schubübertragungsorgan (8) mit dem drehbaren Widerlagerteil (6) fest verbunden ist und ein zylindrisches Element (82) aufweist, das durch zwei zu seiner Achse senkrechte Ebenen begrenzt und in das drehbare Widerlagerteil (6) eingesteckt ist.

16. Rotionsmaschine nach einem der Ansprüche 1 bis 13, dadurch gekennzeichnet, daß das Schubübertragungsorgan (8) mit dem drehbaren Widerlagerteil (6) fest verbunden ist und ein zylindrisches Element (83) aufweist, das axial in das drehbare Widerlagerteil eingesteckt und in seinem mit dem Ende der rotierenden Welle (10) in Kontakt kommenden Teil durch einen einen Wulst bildenden, torischen Abschnitt begrenzt ist.

**17.** Rotionsmaschine nach einem der Ansprüche 1 bis 16, dadurch gekennzeichnet, daß das drehbare Widerlagerteil (6) in bezug auf das verschiebbare Widerlagerteil (5) mit Hilfe von zwei Schrägkugellagern (91, 92) angebracht ist, die gegeneinander angebracht sind, so daß jegliches axiale Spiel zwischen dem drehbaren Widerlagerteil (6) und dem verschiebbaren Widerlagerteil (5) beseitigt ist.

**18.** Rotionsmaschine nach einem der Ansprüche 1 bis 17, dadurch gekennzeichnet, daß das Schubübertragungsorgan (8) mit dem drehbaren Widerlagerteil (6) fest verbunden ist und einen Kranz (81) aufweist, der zur rotierenden Welle (10) koaxial ist und der, wenn die Maschine stillsteht, mit einem mit der rotierenden Welle (10) fest verbundenen Ansatz oder Ring (12) in Kontakt kommt, und daß die rotierende Welle (10) durch die Baugruppe des selbsteinziehbaren Axialwiderlagersystem (40) hindurchgeht.

**19.** Rotionsmaschine nach einem der Ansprüche 1 bis 13, dadurch gekennzeichnet, daß das Schubübertragungsorgan (8) mit dem Ende der rotierenden Welle (10) fest verbunden ist und mit dem Ende des drehbaren Widerlagerteils zusammenwirkt.

FIG.1A

FIG.1B

# FIG.2 A

# FIG.2 B

EP 0 484 209 B1

FIG. 3

FIG. 4

FIG. 3

FIG. 4

EP 0 484 209 B1

FIG.5

FIG.6

# FIG.7

# FIG.8

FIG.9

FIG.10

**FIG.11**

**FIG.12**

**FIG.13**

FIG. 14

EP 0 484 209 B1